## Europäisches Patentamt

## European Patent Office

## Office européen des brevets

(11) Veröffentlichungsnummer: **0 207 926**
**B1**

(12) # EUROPÄISCHE PATENTSCHRIFT

(45) Veröffentlichungstag der Patentschrift:
23.08.89

(21) Anmeldenummer: **86890152.1**

(22) Anmeldetag: **23.05.86**

(51) Int. Cl.⁴: **G02B 6/38**

(54) **Einrichtung zur lösbaren Kupplung zweier lichtleitender Bauteile miteinander.**

(30) Priorität: **05.07.85 AT 1998/85**

(43) Veröffentlichungstag der Anmeldung:
**07.01.87 Patentblatt 87/2**

(45) Bekanntmachung des Hinweises auf die Patenterteilung:
**23.08.89 Patentblatt 89/34**

(84) Benannte Vertragsstaaten:
**AT BE CH DE FR GB IT LI LU NL SE**

(56) Entgegenhaltungen:
**DE-A- 2 646 010**
**US-A- 4 062 620**

**PATENT ABSTRACTS OF JAPAN, Band 5,
Nr. 130 (P-76)[802], 20. August 1981 & JP-A-56 67 813
PATENT ABSTRACTS OF JAPAN, Band 8,
Nr. 137 (P-282)[1574], 26 . Juni 1984 & JP-A-59 37 511**

(73) Patentinhaber: **Gebauer & Griller Kabelwerke
Gesellschaft m.b.H., Muthgasse 34, A-1190 Wien(AT)**

(72) Erfinder: **Hruska, Helmut, Dipl.-Ing. Dr.,
Praterstrasse 66/III/32, A-1020 Wien(AT)**

(74) Vertreter: **Atzwanger, Richard, Dipl.-Ing., Mariahilfer
Strasse 1c, A-1060 Wien(AT)**

## Beschreibung

Die Erfindung betrifft eine Einrichtung zur lösbaren Kupplung zweier Lichtleiter, die an ihren freien Enden mit je einem Stift ausgebildet sind, welche Stifte jeweils in eine Hülse einsetzbar und in dieser geführt mit ihren Stirnflächen aneinander zur Anlage bringbar sind, wobei die Stifte zumindest bereichsweise aus magnetisierbarem bzw. magnetischem Material bestehen und die Hülse, die aus nicht magnetischem Material gefertigt ist, mit mindestens einem Magneten oder mit mindestens einer elektrischen Spule ausgebildet ist.

In der Signalübertragungstechnik werden in steigendem Umfang für die Übertragung von modulierten Lichtimpulsen Lichtleiter eingesetzt. Da Lichtleiter enthaltende Kabel nicht in beliebiger Länge hergestellt werden können, müssen Einrichtungen zu deren Kupplung vorgesehen werden. Zudem besteht das Erfordernis, in Daten- oder Signalanlagen bzw. Schaltschränken auch kurze Lichtleitkabel vorzusehen. Um die angestrebten niedrigen Dämpfungswerte zu erzielen, müssen die hierfür erforderlichen Kupplungen eine hohe mechanische Präzision aufweisen.

Bekannte Kupplungen besteht darin, daß die Enden der Lichtleiter mit Stiften ausgebildet sind, welche von den Lichtleitern durchsetzt sind, wobei die Stirnflächen der Enden der Lichtleiter und der Stifte in einer Ebene liegen, und daß diese Stifte von beiden Seiten in eine Hülse eingesetzt und innerhalb dieser mit ihren Endflächen aneinander zur Anlage gebracht sind. Die Hülse dient dabei zur Führung und Halterung der Stifte. Um die meist geschliffenen Endflächen der Stifte in Anlage aneinander zu halten, ist es bekannt, Schraubverbindungen bzw. bajonettartige Verbindungen vorzusehen, durch welche die Stifte mit der Hülse lösbar gekuppelt sind.

Durch diese bekannten Kupplungseinrichtungen wird zwar den Forderungen auf Präzision der Kupplung, um den Versatz der Lichtleiter gegeneinander und damit die hierdurch bedingten Dämpfungsverluste zu minimieren, einerseits und der Forderung auf dichte Anlage der Stirnflächen der Lichtleiter aneinander, gleichfalls um hierdurch die Dämpfungsverluste zu minimieren, andererseits entsprochen. Allerdings bedingen die Halte- bzw. Klemmeinrichtungen einen hohen Aufwand in der Fertigung und in der Montage. Zudem wird durch diese der erforderliche Platzbedarf erhöht.

Es ist weiters bekannt, Lichtleiter mittels sogenannter Trockenspleiße miteinander zu verbinden, wobei diese festen Verbindungen auch bei vergleichsweise geringem Fertigungsaufwand den gestellten Anforderungen auf Minimierung der bedingten Dämpfung entsprechen. Allerdings handelt es sich dabei – wie erwähnt – um nicht oder nur schwer lösbare Verbindungen.

Aus der US-PS 4 062 620 ist eine Einrichtung zur Kupplung zweier Lichtleiter bekannt, welche an ihren freien Enden mit aus magnetischem Material gefertigten Stiften, welche jeweils in aus nicht magnetischem Material gefertigten Hülsen geführt und mittels eines Magneten aneinander zur Anlage gebracht bzw. aneinander in Anlage gehalten sind, ausgebildet sind. Diese bekannte Vorrichtung ist jedoch deshalb nachteilig, da zwei gesonderte Führungshülsen vorgesehen sind, wodurch ein relativ hoher Fertigungsaufwand erfordert wird, und da weiters der Magnet nicht unmittelbar auf die Hülsen aufgesetzt ist. Vielmehr wird der magnetische Kraftfluß über zwischen den Magneten und den Hülsen angeordnete Polschuhe zu den Stiften geleitet. Dabei weisen diese Polschuhe eine achsiale Länge auf, die der achsialen Länge der Hülsen gleich ist, wodurch hohe Streuflüsse bedingt werden, weswegen die magnetischen Kräfte erst dann auf die Stifte maßgeblich zur Wirkung kommen, sobald deren Stirnflächen über die inneren Enden der Polschuhe bzw. der Hülse hinausgetreten sind bzw. in den Luftspalt hineinragen. Aus diesen Gründen ist zur Erzielung der angestrebten Funktion dieser Kupplung ein relativ starker Magnet erforderlich.

Weiters besteht bei einer zweiteiligen Ausbildung der Hülse auch das Problem, diese beiden Teile genau gegeneinander ausrichten zu müssen, da ansonsten die angestrebte exakte Kupplung der Stifte, die in ihrem Zentrum von den Lichtleitern durchsetzt sind, nicht erzielbar ist. Sofern die Hülsen nicht genau gegeneinander ausgerichtet sind, tritt ein Versatz der Stirnflächen der Lichtleiter gegeneinander auf, wodurch hohe Dämpfungen in der Lichtleitung bedingt werden.

Diese bekannte Kupplungseinrichtung ist schließlich auch deshalb nachteilig, da die magnetischen Kräfte schon am Beginn der Führungshülsen wirken, wodurch Schwierigkeiten bedingt werden, die Stifte in die Hülsen einzuführen, da diese von den die Polschuhe durchsetzten Magnetkräfte angezogen werden.

Demnach liegt der Erfindung die Aufgabe zugrunde, eine Einrichtung zur lösbaren Kupplung zweier Lichtleiter zu schaffen, durch welche die den bekannten Kupplungen anhaftenden Nachteile vermieden werden und durch welche bei vergleichsweise geringem Fertigungsaufwand den Anforderungen auf Präzision und hohe Haltekraft entsprochen wird. Insbesondere liegt der Erfindung die Aufgabe zugrunde, eine Einrichtung zur lösbaren Kupplung zweier Lichtleiter zu schaffen, die ungeachtet ihrer einfachen Ausbildung und daher billigen Fertigung eine hohe Präzision und damit eine Minimierung in der Dämpfung gewährleistet und die zudem den Forderungen auf Miniaturisierung entspricht.

Diese Aufgaben werden erfindungsgemäß dadurch gelöst, daß entweder den beiden Stiften eine einzige, durchgehende Verbindungshülse zugeordnet ist, auf welcher der Magnet oder die elektrische Spule unmittelbar aufsitzt und welche den Magneten oder die elektrische Spule in axialer Richtung beidseitig überragt, oder daß der Magnet als Hülse ausgebildet ist und derart zwischen zwei Hülsen eingesetzt ist, daß die Stifte durch diese drei Teile geführt sind.

Vorzugsweise sind die Stifte als Permanentmagneten ausgebildet oder sind sie bereichsweise aus weichmagnetischem oder nicht magnetischem Material und bereichsweise aus permanentmagnetischem Material gefertigt, wobei sie aus einem Kern aus weichmagnetischem oder nicht magnetischem Material gefertigt sein können, welche mit einem Überzug aus einem anderen magnetischen Material ausgebildet ist.

Nach weiteren bevorzugten Ausführungsbeispielen sind die Stifte im Bereich ihrer der Verbindungsseite abgewandten Stirnfläche mit einem Ring oder mit einer Schulter ausgebildet. Weiters können die aneinander zur Anlage kommenden Stirnflächen der Stifte mit gegengleichen Profilierungen ausgebildet sein, wobei sie insbesondere gegengleich kegelstumpfförmig oder mit einem zylindrischen Zapfen und mit einer gegengleichen zylindrischen Ausnehmung ausgebildet sind. Schließlich können die freien Enden der beiden Stifte mit je einem Vorsprung bzw. mit einer Ausnehmung identisch ausgebildet sein, wobei in der Hülse ein weiteres Kupplungselement vorgesehen ist, das an seinen beiden Stirnflächen mit den Stiften gegengleichen Ausnehmungen oder Vorsprüngen versehen ist.

Der Gegenstand der Erfindung ist nachstehend anhand von in der Zeichnung dargestellten Ausführungsbeispielen näher erläutert. Es zeigen:

Die Fig. 1 und 2 zwei Varianten einer erfindungsgemäßen Einrichtung zur lösbaren Kupplung zweier Lichtleiter,

die Fig. 3a, 3b, 3c und 3d Ausführungsvarianten der die Lichtleiter umgebenden Stifte,

die Fig. 4 eine weitere Ausführungsvariante der erfindungsgemäßen Einrichtung,

die Fig. 5a und 5b zwei Varianten der Kupplung, bei welcher die Stifte mit Anschlägen ausgebildet sind,

die Fig. 6a und 6b zwei Ausführungsvarianten, bei welchen die aneinander zur Anlage kommenden Stirnflächen der Stifte mit gegengleichen Profilierungen ausgebildet sind,

die Fig. 7 und 8 zwei Ausführungsformen einer Variante, bei welcher der die Hülse umgebende Magnet durch eine elektrische Spule gebildet ist, wodurch die Kupplung als Schalter einsetzbar ist und

die Fig. 9 eine Ausführungsvariante, bei welcher der die Hülse umgebende Magnet gegenüber der Hülse achsial verstellbar ist.

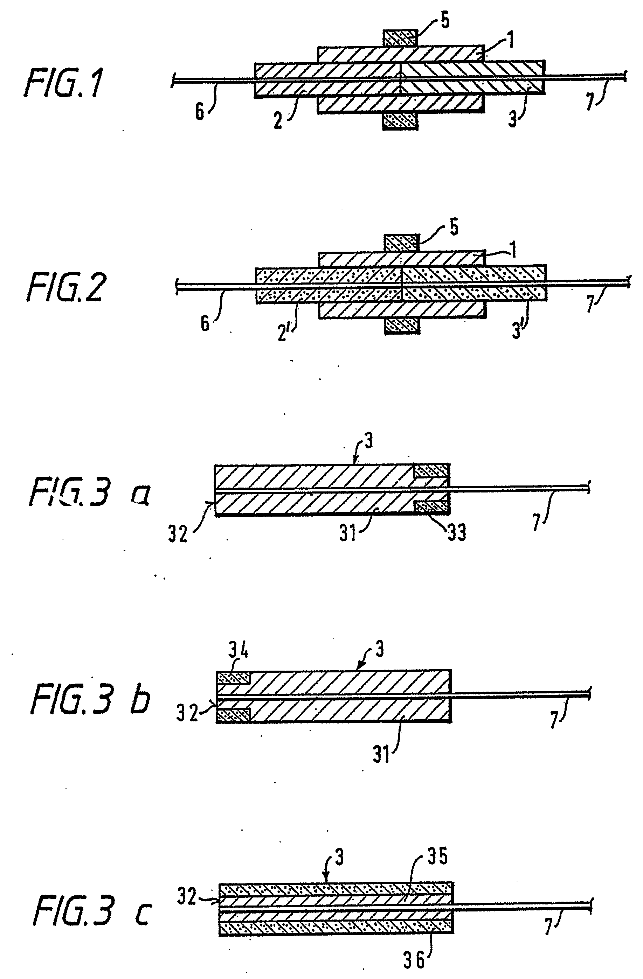

Wie aus Fig. 1 ersichtlich ist, besteht eine erfindungsgemäße Einrichtung aus einer Hülse 1, die aus nicht magnetischem Material gefertigt ist, in welche zwei Stifte 2 und 3, welche die Enden der Lichtleiter 6 und 7, die miteinander gekuppelt werden sollen, umgeben, eingeschoben sind. Die Stifte 2 und 3 sind aus weichmagnetischem Material gefertigt. Weiters ist die Hülse 1 von einem ringförmigen Magneten 5 umgeben. Aufgrund der Wirkung des Magneten 5 auf die Stifte 2 und 3 werden diese in die Hülse 1 hineingezogen, wodurch deren Stirnflächen aneinander zur Anlage kommen und in dieser Anlage gehalten werden. Hierdurch werden auch die Stirnflächen der Lichtleiter 6, 7 aneinander zur Anlage gebracht, wodurch die Lichtleiter 6, 7 miteinander gekuppelt sind. Das Ausführungsbeispiel gemäß Fig. 2 unterscheidet sich vom Ausführungsbeispiel gemäß Fig. 1 dadurch, daß die Stifte 2' und 3' als Permanentmagneten ausgebildet sind, wobei die aneinander zur Anlage kommenden Stirnflächen ungleiche Pole aufweisen.

In den Fig. 3a, 3b, 3c und 3d sind Stifte 3 dargestellt, welche teilweise aus weichmagnetischem oder nicht magnetischem Material, z.B. aus Keramik, Kunststoff oder aus einer Buntmetall-Legierung, die Aluminium, Messing, Bronze, Kupfer und Nickel enthalten kann, und teilweise aus permanentmagnetischem Material gefertigt sind: Gemäß dem Ausführungsbeispiel nach Fig. 3a besteht der Stift 3 aus einem Zylinder 31, der aus weichmagnetischem oder nicht magnetischem Material gefertigt ist und der an seinem von der Stirnfläche 32 abgewandten Ende mit einem Teil 33 aus permanentmagnetischem Material ausgebildet ist.

Gemäß dem Ausführungsbeispiel nach Fig. 3b ist der Zylinder 31 in seinem an die freien Stirnflächen 32 anliegenden Bereich mit einem permanentmagnetischem Teil 34 ausgebildet. Gemäß dem Ausführungsbeispiel nach Fig. 3c besteht der Stift 3 aus einem inneren zylindrischem Teil 35, der aus weichmagnetischem oder nicht magnetischem Material, gefertigt ist, und aus einem diesen umschließenden Überzug 36, der aus weichmagnetischem oder permanentmagnetischem Material gefertigt ist. Nach dem Ausführungsbeispiel der Fig. 3d besteht der Stift 3 aus einem im Bereich der freien Stirnfläche 32 befindlichen Teil 37 aus weichmagnetischem oder nicht magnetischem Material und einem daran anschließenden zylindrischen Teil 38 aus permanentmagnetischem oder weichmagnetischem Material. Der Teil 37 kann sich auch in dem von der freien Stirnfläche 32 abgewandten Bereich befinden.

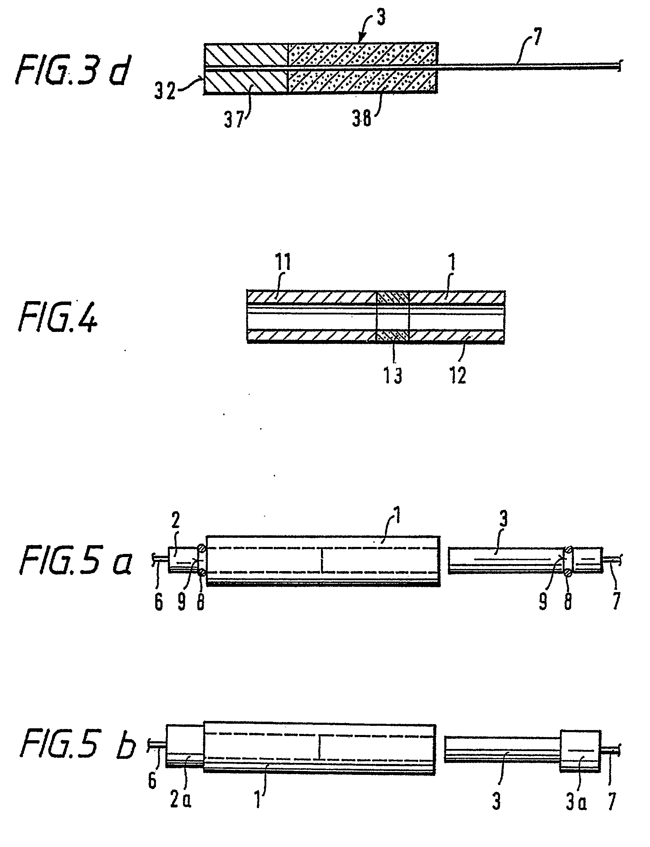

Bei der Ausführungsvariante gemäß Fig. 4 ist die Hülse 1 aus zwei Teilen 11 und 12 gebildet, welche aus nicht magnetischem Material gefertigt sind und befindet sich zwischen beiden Teilen 11 und 12 ein Permanentmagnet 13, wobei die Stifte 2 und 3 durch die Teile 11, 12 und 13 geführt sind.

Wie in Fig. 5a dargestellt ist, können die Stifte 2 und 3 mit in einer Nut 9 gehaltenen Ringen 8 ausgebildet sein, welche an den freien Stirnflächen der Hülse 1 zur Anlage kommen und welche als Distanz- und Dichtungsringe dienen. Hierdurch wird gewährleistet, daß der jeweils erste Sitft 2 oder 3 nur bis zu einer vorbestimmten Lage in der Hülse 1 hineingezogen wird. Wie in Fig. 5b dargestellt ist, können die Anschläge auch dadurch bewirkt werden, daß die Stifte 2 und 3 an ihren von den freien Stirnflächen abliegenden Enden mit Bereichen 2a, bzw. 3a ausgebildet sind, die einen vergrößerten Querschnitt aufweisen, wodurch Schultern gebildet sind, die an den freien Stirnflächen der Hülse 1 zur Anlage kommen.

Um einerseits eine Vergrößerung der einander zur Anlage kommenden Flächen zu erzielen bzw. um eine Führung der Stifte aneinander zu bewirken, was bei der Kupplung von Lichtleitern dafür von Bedeutung ist, um den achsialen Versatz derselben zu minimieren, können weiters die Stifte 2 und 3 an den zugewandten Stirnflächen profiliert ausgebildet sein:

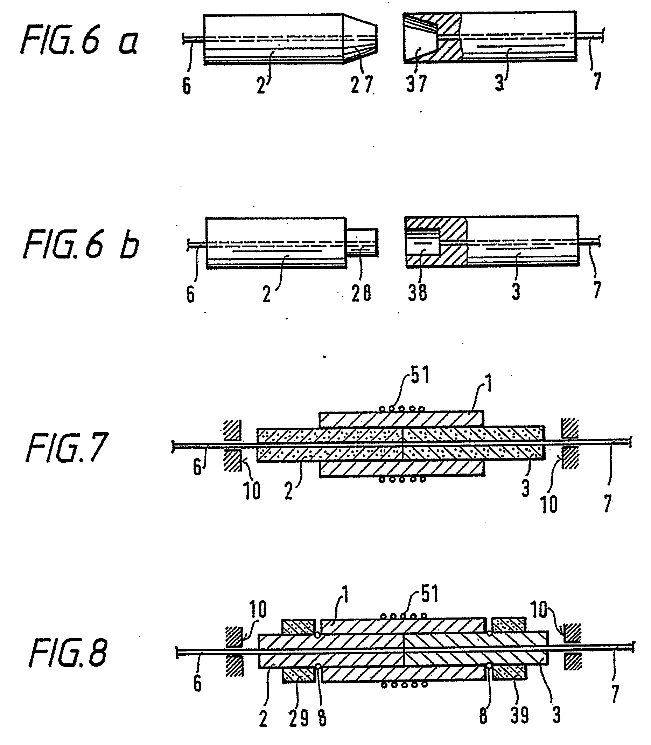

Gemäß dem Ausführungsbeispiel nach Fig. 6a sind die einander zugewandten Enden der Stifte 2 und 3 gegengleich konisch ausgebildet. Demnach ist der Stift 2 an seinem freien Ende mit einer Konusfläche 27 ausgebildet und ist der Stift 3 an seinem freien Ende mit einer konusförmigen Aussparung 37 ausgebildet. Gemäß dem Ausführungsbeispiel nach Fig. 6b ist der Stift 2 an seinem freien Ende mit einem zylindrischen Zapfen 28 ausgebildet, welchem im Stift 3 eine gegengleiche zylindrische Bohrung 38 entspricht. Gemäß einer Ausführungsvariante können die beiden Stifte 2 und 3 mit identischen Vorsprüngen oder mit identischen Ausnehmungen ausgebildet sein und kann in der Hülse 1 ein zusätzliches Kupplungselement vorgesehen sein, das an seinen beiden Stirnflächen mit entsprechend den Stiften gegengleichen Ausnehmungen oder Vorsprüngen ausgebildet ist.

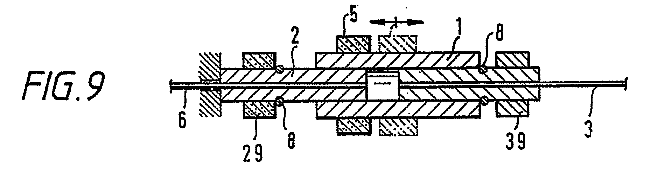

Wie weiters in den Fig. 7 und 8 dargestellt ist, ist die anmeldungsgemäße Einrichtung auch als schaltbare Kupplung zweier Lichtleiter einsetzbar. Sofern nämlich an Stelle des in Hülse 1 umgebenden Permanentmagneten eine elektrische Spule 51 vorgesehen ist, kann durch diese ein magnetisches Feld aufgebaut werden, durch welches entweder die beiden Stifte 2 und 3, die als Permanentmagneten ausgebildet sind, aneinander in Anlage gehalten werden oder voneinander in Abstand gebracht werden können. Zur Begrenzung der Stellbewegung der Stifte 2 und 3 müssen dabei Anschläge 10 vorgesehen sein. Demnach kann durch eine derartige Einrichtung in Abhängigkeit von der Speisung der Spule 51 eine Steuerung in der Kupplung der beiden Lichtleiter 6 und 7 miteinander vollzogen werden bzw. kann in einfacher Weise durch elektrische Signale, mit welchen die Spule 51 beaufschlagt wird, eine Modulierung der über die Lichtleiter 6 und 7 übertragenen Lichtimpulse bewirkt werden. In Fig. 8 ist eine Variante dahingehend dargestellt, daß die Stifte 2 und 3 aus weichmagnetischem oder nichtmagnetischem Material gefertigt und mit Permanentmagneten 29 bzw. 39 ausgebildet sind. In der Fig. 9 ist eine weitere Variante dargestellt, gemäß welcher die Hülse 1 von einem Permanentmagneten 5 umgeben ist, der gegenüber der Hülse 1 verschiebbar ist, wodurch ebenfalls eine Stellbewegung der Stifte 2 und 3 bewirkt werden kann.

Die Stifte sind vorzugsweise mit einem kreisförmigen Querschnitt ausgebildet, wobei sie zur Erzielung einer Sicherung gegen Verdrehung mit einem radial abragenden Zapfen, der in eine in der Hülse vorgesehenen, sich längs erstreckenden Nut einragt, ausgebildet sein können. Die Stifte können jedoch auch einen anderen, z.B. einen polygonalen Querschnitt aufweisen.

## Patentansprüche

1. Einrichtung zur lösbaren Kupplung zweier Lichtleiter, die an ihren freien Enden mit je einem Stift ausgebildet sind, welche Stifte jeweils in eine Hülse einsetzbar und in dieser geführt mit ihren Stirnflächen aneinander zur Anlage bringbar sind, wobei die Stifte zumindest bereichsweise aus magnetisierbarem bzw. magnetischem Material bestehen und die Hülse, die aus nicht magnetischem Material gefertigt ist, mit mindestens einem Magneten oder mit mindestens einer elektrischen Spule ausgebildet ist, dadurch gekennzeichnet, daß entweder den beiden Stiften (2, 3) eine einzige, durchgehende Verbindungshülse (1) zugeordnet ist, auf welcher der Magnet (5) oder die elektrische Spule unmittelbar aufsitzt und welche den Magneten (5) oder die elektrische Spule in axialer Richtung beidseitig überragt (Fig. 1) oder daß der Magnet (13) als Hülse ausgebildet ist und derart zwischen zwei Hülsen (11, 12) eingesetzt ist, daß die Stifte (2, 3) durch diese drei Teile (11, 12, 13) geführt sind (Fig. 4).

2. Einrichtung nach Anspruch 1, dadurch gekennzeichnet, daß die Stifte (2', 3') als Permanentmagneten ausgebildet sind (Fig. 2).

3. Einrichtung nach Anspruch 1, dadurch gekennzeichnet, daß die Stifte (4) bereichsweise aus weichmagnetischem oder nichtmagnetischem Material und bereichsweise aus permanentmagnetischem Material gefertigt sind (Fig. 3a, 3b, 3c, 3d).

4. Einrichtung nach Anspruch 3, dadurch gekennzeichnet, daß die Stifte (3) aus einem Kern (35) aus weichmagnetischem oder nichtmagnetischem Material gefertigt sind, welcher mit einem Überzug (36) aus einem anderen magnetischem Material ausgebildet ist (Fig. 3c).

5. Einrichtung nach einem der Ansprüche 1 bis 4, dadurch gekennzeichnet, daß die Stifte (2, 3) im Bereich von ihrem der Stirnfläche abgewandten Ende mit einem Ring (8) oder mit einer Schulter (2a, 3a) ausgebildet sind (Fig. 5a, Fig. 5b).

6. Einrichtung nach einem der Ansprüche 1 bis 5, dadurch gekennzeichnet, daß die einander zur Anlage kommenden Stirnflächen der Stifte (2, 3) mit gegengleichen Profilierungen (27, 37; 28, 38) ausgebildet sind (Fig. 6a, 6b).

7. Einrichtung nach Anspruch 6, dadurch gekennzeichnet, daß die beiden Stirnflächen (27, 37) gegengleich kegelstumpfförmig ausgebildet sind (Fig. 6a).

8. Einrichtung nach Anspruch 6, dadurch gekennzeichnet, daß eine der Stirnflächen mit einem zylindrischen Zapfen (28) und die andere Stirnfläche mit einer zylindrischen Ausnehmung (38) ausgebildet sind (Fig. 6b).

9. Einrichtung nach einem der Ansprüche 1 bis 8, dadurch gekennzeichnet, daß die freien Ende der beiden Stifte (2, 3) mit je einem Vorsprung oder mit einer Ausnehmung identisch ausgebildet sind, und daß in der Hülse (1) ein weiteres Kupplungselement vorgesehen ist, das an seinen beiden Stirnflächen mit den Stiften (2, 3) gegengleichen Ausnehmungen oder Vorsprüngen ausgebildet ist.

## Claims

1. An apparatus for releasably coupling two optical fibres, which are each constructed at their free ends with a pin, which pins may each be inserted into a sleeve and guided therein so that their end faces come to rest against each other, the pins consisting at least in part of magnetizable or magnetic material and the sleeve, which is made of non-magnetic material, being constructed with at least one magnet or at least one electric coil, characterized in that either a single continuous connecting sleeve (1) is associated with the two pins (2, 3), on which sleeve (1) the magnet (5) or the electric coil sits directly and which projects beyond the magnet (5) or the electric coil on both sides in the axial direction (Fig. 1), or the magnet (13) is constructed as a sleeve and is inserted between two sleeves (11, 12) in such a way that the two pins (2, 3) are guided through these three parts (11, 12, 13) (Fig. 4).

2. An apparatus according to claim 1, characterized in that the pins (2', 3') are constructed as permanent magnets (Fig. 2).

3. An apparatus according to claim 1, characterized in that the pins (4) are made in part of soft magnetic or non-magnetic material and in part of permanent magnetic material (Figs. 3a, 3b, 3c, 3d).

4. An apparatus according to claim 3, characterized in that the pins (3) are made of a core (35) of soft magnetic or non-magnetic material, which is constructed with a coating (36) of another magnetic material (Fig. 3c).

5. An apparatus according to any one of claims 1 to 4, characterized in that the pins (2, 3) are constructed in an area of their end remote from the end faces with rings (8) or shoulders (2a, 3a) (Fig. 5a, Fig. 5b).

6. An apparatus according to any one of claims 1 to 5, characterized in that the end faces of the pins (2, 3) coming to rest against each other are constructed with complementary shapes (27, 37, 28, 38) (Figs. 6a, 6b).

7. An apparatus according to claim 6, characterized in that the two end faces (27, 37) are constructed to be complementarily frusto-conical (Fig. 6a).

8. An apparatus according to claim 6, characterized in that one of the end faces is constructed with a cylindrical stud (28) and the other end face is constructed with a cylindrical recess (38) (Fig. 6b).

9. An apparatus according to any one of claims 1 to 8, characterized in that the free ends of the two pins (2, 3) are each constructed identically with a projection or with a recess and in that the sleeve (1) there is provided a further coupling member, which is constructed at its two end faces with recesses complementary to the pins or with projections.

## Revendications

1. Dispositif pur l'accouplement amovible de deux guides optiques présentant chacun à leurs extrémités libres une broche, lesquelles broches peuvent être introduites dans une gaine et guidées dans celle-ci de manière que leurs faces frontales s'appliquent l'une contre l'autre, les broches étant, au moins dans certaines zones, en matière magnétisable ou magnétique, et la gaine qui est réalisée en matière non magnétique, comporte au moins un aimant ou au moins une bobine électrique, caractérisé en ce que soit une seule gaine de liaison (1) continue, sur laquelle repose directement l'aimant (5) ou la bobine électrique et qui dépasse axialement des deux côtés de l'aimant (5) ou de la bobine électrique, est associée aux deux broches (2, 3), (figure 1), soit l'aimant (13) a la forme d'une gaine et est placé entre deux gaines (11, 12), de telle sorte que les broches (2, 3) soient guidées à travers ces trois éléments (11, 12, 13) (figure 4 ).

2. Dispositif selon la revendication 1, caractérisé en ce que les broches (2', 3') sont des aimants permanents (figure 2).

3. Dispositif selon la revendication 1, caractérisé en ce que les broches (4) sont réalisées dans certaines zones en marière magnétique douce ou non magnétique, et dans certaines zones en matière magnétique permanente (figures 3a, 3b, 3c, 3d).

4. Dispositif selon la revendication 3 , caractérisé en ce que les broches (3) sont réalisées dans un cœur (35) en matière magnétique douce ou non magnétique, qui comporte un revêtement (36) d'une autre matière magnétique (figure 3c).

5. Dispositif selon l'une des revendications 1 à 4, caractérisé en ce que les broches (2, 3) sont pourvues d'une bague (8) ou d'un épaulement (2a, 3a), dans la zone de leur extrémité opposée à la face frontale (figure 5a, figure 5b).

6. Dispositif selon l'une des revendications 1 à 5, caractérisé en ce que les faces frontales s'appliquent l'une contre l'autre, des broches (2, 3) sont pourvues de profilages correspondants (27, 37; 28, 38) (figures 6a, 6b).

7. Dispositif selon la revendication 6, caractérisé en ce que les deux faces frontales (27, 37) ont une forme tronconique correspondante (figure 6a).

8. Dispositif selon la revendication 6, caractérisé en ce que l'une des faces frontales est pourvue d'un tenon (28) cylindrique et l'autre face frontale d'un évidement (38) cylindrique (figure 6b).

9. Dispositif selon l'une des revendications 1 à 8, caractérisé en ce que les extrémités libres des deux broches (2, 3) ont une configuration identique avec chacune une saillie ou un évidement, et en ce que dans la gaine (1) il est prévu un autre élément d'accouplement qui présente, sur ses deux faces frontales comportant les broches (2, 3), des évidements ou des saillies correspontants.

FIG.1

FIG.2

FIG.3 a

FIG.3 b

FIG.3 c

FIG.3 d

FIG.4

FIG.5 a

FIG.5 b

FIG.6 a

FIG.6 b

FIG.7

FIG.8

FIG.9